# EUROPÄISCHE PATENTANMELDUNG

(11) **EP 1 336 826 A2**
(43) Veröffentlichungstag der Anmeldung: **20.08.2003**
(21) Anmeldenummer: 03002967.2
(22) Anmeldetag: 11.02.2003
(51) Int. Cl.: G01G 19/44

(54) **Personenwaage**

(30) Priorität: 13.02.2002 DE 10205821
(71) Anmelder: Soehnle-Waagen GmbH & Co. KG, 71540 Murrhardt (DE)
(72) Erfinder: Nahm, Werner, Dr., 74426 Bühlerzell (DE)

(57) **Zusammenfassung**

Die Erfindung betrifft eine Personenwaage mit einer Trittplatte 3 aus Glas, zumindest einem Kraftaufnehmer und/oder zumindest einer Elektrode und einer mit diesem beziehungsweise diesen über Leiterbahnen verbundenen Elektronik- und Anzeigeeinheit 2. Für eine kostengünstige Großserienfertigung wird vorgeschlagen, daß die Trittplatte 3 als Träger für die mit dieser kraftschlüssig verbundenen Leiterbahnen 5 und/oder Elektroden aus einem leitenden Dünnschichtmaterial ausgebildet ist.

## Beschreibung

Die Erfindung betrifft eine Personenwaage gemäß dem Oberbegriff des Patentanspruches 1.

Besonders bei Personenwaagen mit einer Trittplatte aus Glas oder ähnlichen Materialien ist die Anordnung von Elektroden beziehungsweise Sensoren und die Verlegung der Leiterbahnen von diesen Elektroden zu einer damit verbundenen Elektronik-Anzeigeeinheit problematisch. Einerseits soll die Waage bedingt durch die Trittplatte aus Glas eine Leichtigkeit ausstrahlen, andererseits stören dann die durch die Glasfläche sichtbaren Leiterbahnen. Dies wurde bei den gängigen Personenwaagen mit einer Trittplatte aus Glas dadurch gelöst, dass die Leiterbahnen hinter Rahmenteilen verlegt wurden. Dabei sind enge Grenzen gesteckt, so dass es immer zu einem Kompromiss zwischen gutem Design und der notwendigen Funktionalität kam.

Aufgabe der Erfindung ist es, die Leiterbahnen und / oder die Elektroden bei einer Personenwaage mit einer Trittplatte aus Glas derart auszubilden, dass alle Optionen für ein ausgewogenes Design erhalten bleiben, die Qualität und Funktionalität gewährleistet ist, und dass eine kostengünstige Großserienfertigung möglich wird.

Die Aufgabe wird mit den kennzeichnenden Merkmalen des Anspruchs 1 gelöst. Durch die Ausbildung der Elektroden und / oder Leiterbahnen aus Dünnschichtmaterial unter Nutzung der Trittplatte als Träger wird die Fertigung sehr stark vereinfacht. Auf Verdrahtungen kann gänzlich verzichtet werden. Ein weiterer großer Vorteil ist die Möglichkeit, alle graphischen Strukturen zu verwirklichen. Insbesondere können Schaltflächen in den unterschiedlichsten Konfigurationen und mit entsprechenden Symbolen verwirklicht werden.

Ausgestaltungen der Erfindung sind den Unteransprüchen zu entnehmen. So können die Leiterbahnen und / oder die Elektroden als Klebefolien, sogenannte Abziehbilder, im Druckverfahren, in einem Fotolithographischen Verfahren und schließlich auch im Vakuumverfahren durch Aufdampfen oder in der Sputter-Technik aufgebracht werden. Im Siebdruckverfahren empfiehlt sich besonders Silber als Werkstoff, wodurch sich Leiterbahnen und Elektroden verwirklichen lassen, die bei der Verspannung des Einscheiben-Sicherheitsglases dauerhaft in die Glasoberfläche eingebrannt werden.

In der Sputter-Technik lassen sich bei Verwendung spezieller Metalloxide, zum Beispiel Indium-Zinn-Oxid, optisch transparente hochleitfähige Leiterbahnen auf die Glastrittplatte aufbringen.

Diese sind bei entsprechender Tönung des Glases praktisch nicht sichtbar.

Aber auch Materialien wie Kupfer, Aluminium und selbst Stahl sind einsetzbar. Diese können ebenfalls mit den üblichen Verfahren zur Erhöhung der Festigkeit eingebrannt werden.

Durch die freie Wahl der Strukturen ist es möglich, sowohl Schalt- als auch Sensorfunktionen wahrzunehmen. Die Elektroden können paarweise oder auch vielfach angebracht werden, wodurch einerseits weitflächige Schaltbereiche beziehungsweise Berührungsbereiche verwirklicht werden können.

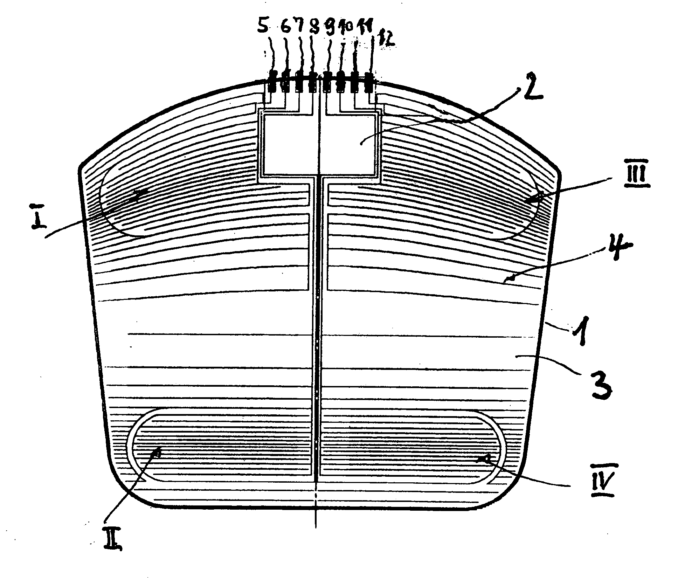

Ein Ausführungsbeispiel ist anhand der Zeichnung nochmals näher erläutert.

Eine Waage 1 mit einem Anzeigefeld 2, hinter dem sich eine entsprechende Elektronik verbirgt, ist mit einer Trittplatte 3 versehen. Auf dieser Trittplatte sind Messelektroden aus Silber 4 im Siebdruckverfahren angebracht. Diese Messelektroden sind in vier Feldem, I, II, III, IV aufgeteilt. Jedes Feld kann einzeln als Kontaktfläche wirken. Paarweise angeordnete Elektroden können als Berührungsschalter eingesetzt werden. Wie aus der Zeichnung leicht ersichtlich, wurde so auf der Glasstrittplatte einer Personenwaage eine elektronische Leiterbahnstruktur realisiert. Die Kontaktelektroden laufen in die Leiterbahnen 5 bis 12 zusammen. Diese Leiterbahnen 5 bis 12 führen in eine nicht näher dargestellte Elektronik- und Anzeigeeinheit.

## Patentansprüche

1. Personenwaage mit einer Trittplatte (3) aus Glas, zumindest einen Kraftaufnehmer und / oder zumindest einer Elektrode und einer mit diesem beziehungsweise diesen über Leiterbahnen verbundenen Elektronik- und Anzeigeeinheit (2), **dadurch gekennzeichnet, dass** die Trittplatte (3) als Träger für die mit dieser kraftschlüssig verbundenen Leiterbahnen (5 bis 12) und / oder Elektroden aus einem leitenden Dünnschichtmaterial ausgebildet ist.

2. Personenwaage nach Anspruch 1, **dadurch gekennzeichnet, dass** die Leiterbahnen und / oder die Elektroden als Klebefolien ausgebildet sind.

3. Personenwaage nach Anspruch 1, **dadurch gekennzeichnet, dass** die Leiterbahnen und / oder die Elektroden über ein Druckverfahren aufgebracht sind.

4. Personenwaage nach Anspruch 1, **dadurch gekennzeichnet, dass** die Leiterbahnen und / oder die Elektroden über ein photolitographisches Verfahren aufgebracht sind.

5. Personenwaage nach Anspruch 1, **dadurch gekennzeichnet, dass** die Leiterbahnen und / oder die Elektroden über ein Aufdampf- oder Sputterverfahren aufgebracht sind.

6. Personenwaage nach Anspruch 1, **dadurch gekennzeichnet, dass** die Leiterbahnen und / oder die Elektroden aus einem optisch transparentem, elektrisch leitfähigem Material bestehen.

7. Personenwaage nach einem der Ansprüche 1 bis 6, **dadurch gekennzeichnet, dass** die Leiterbahnen auf der Unterseite und / oder der Oberseite der Trittplatte angebracht sind.
